# EUROPEAN PATENT SPECIFICATION

(11) **EP 1 707 544 B1**
(45) Date of publication and mention of the grant of the patent: **19.01.2011**
(21) Application number: 05025167.7
(22) Date of filing: 17.11.2005
(51) Int. Cl.: C04B 35/565

(54) **Silicon carbide--based honeycomb structure**
Wabenkörper-Struktur auf Basis von Siliziumcarbid
Structure en nid d'abeilles à base de carbure de silicium

(30) Priority: 30.03.2005 JP 2005099054
(43) Date of publication of application: 04.10.2006
(73) Proprietor: IBIDEN CO., LTD., Ogaki-shi, Gifu-ken 503-8604 (JP)
(72) Inventor: Koyama, Tatsuya, Ibigawa-cho Ibi-Gun Gifu 501-0695 (JP); Takamatsu, Shoji, Ibigawa-cho Ibi-Gun Gifu 501-0695 (JP)
(74) Representative: Grünecker, Kinkeldey, Stockmair & Schwanhäusser Anwaltssozietät

(56) References cited:
- EP-A- 1 142 619
- US-A- 560 291
- "Growth of 6H and 4H silicon carbide single crystals by the modified Lely process utilizing a dual-seed crystal method" APPLIED PHYSICS LETTERS, AIP, AMERICAN INSTITUTE OF PHYSICS, MELVILLE, NY, US, vol. 69, no. 24, 9 December 1996 (1996-12-09), pages 3728-3730, XP012016800 ISSN: 0003-6951
- CAWLEY ET AL.: "Ceramic Transactions, Silicon Carbide'87, Vol.2" 1989, THE AMERICAN CERAMIC SOCIETY , USA , XP002373728 * page 253 - page 254 *
- PAMPHLET: "Hexoloy: SiC ceramic materials" 1997, SAINT GOBAIN/THE CARBORUNDUM COMPANY , USA , XP002373729 * the whole document *

## Description

### TECHNICAL FIELD

The present invention relates to a honeycomb structure obtainable by sintering an object comprising a silicon carbide-containing particle.

### BACKGROUND ART

Conventionally, as a filter for trapping particulates contained in exhaust gas from, for example, an automobile, a filter composed of a honeycomb structure of a ceramic sintered object has been employed and silicon carbide is mainly employed for the ceramic from the viewpoint of, for example, the durability of the sintered object.

A silicon carbide-based sintered object is usually obtained by molding silicon carbide particles as raw materials into a molded object with a predetermined shape and subsequently burning the molded object.

For example, a method of manufacturing a β-type porous silicon carbide sintered object by mixing, into β-type polycrystalline silicon carbide with an average particle diameter of 0.1 - 5 µm, powder with an average diameter within a range of 0.5 - 100 µm and larger than the average particle diameter of the β-type polycrystalline silicon carbide, and burning the mixture at a temperature of 1700 - 2300 °C, is disclosed in JP-A-5-139861.

Also, a method of manufacturing a silicon carbide-based honeycomb filter is disclosed in JP-A-9-202671, wherein a raw material composition, in which 5 - 65 parts by weight of β-type silicon carbide powder with an average particle diameter of 0.1 - 1.0 µm, a binder for molding, and a liquid dispersion medium are compounded and mixed into 100 parts by weight of α-type silicon carbide powder with an average particle diameter of 0.3 - 50 µm, is molded into a honeycomb filter shape with the thickness of a cell wall being 0.05 - 1.0 mm by an extrusion molding method and, subsequently, the β-type silicon carbide powder is re-crystallized by burning in non-oxidative atmosphere.

Further, a method of manufacturing a porous silicon carbide sintered object with the mean value of crystal particle diameter being 5 - 100 µm, a pore size of 1 - 30 µm, and a porosity of 20 - 60 %, is disclosed in JP-A-2000-16872, which is composed of a sequence of the following first process through third process:
The first process: a process for uniformly mixing 10 - 70 parts by weight of α-type or β-type silicon carbide powder with an average particle diameter of 0.1 - 1 µm into 100 parts be weight of α-type silicon carbide powder with an average particle diameter of 5 - 100 µm;
The second process: a process of molding a mixture obtained from the aforementioned first process; and
The third process: a process of burning a molded object obtained from the aforementioned second process at a temperature within a range of 1700 - 2300 °C. However, in regard to β-type silicon carbide as disclosed in JP-A-5-139861, sintering of the β-type silicon carbide does not proceed but particle growth of the β-type silicon carbide is only facilitated, at a sintering temperature of approximately 2200 °C and abnormal particle growth of the β-type silicon carbide may be exhibited.

Also, when mixture particles of α-type silicon carbide and β-type silicon carbide as disclosed in JP-A-9-202671 or JP-A-2000-16872 are sintered, the sintering of the particles may not sufficiently proceed, even after a long time treatment.

Furthermore, conventionally, an oxide-based catalyst-supporting layer such as alumina or titania is frequently set on the surface of a filter for trapping particulates (referred to as a "honeycomb filter" below) which is composed of a silicon carbide-based sintered object in order to enhance a reactivity with gas particles. However, there is a problem that such a catalyst-supporting layer separates when local temperature rise in the honeycomb filter is caused during a regenerating treatment for the honeycomb filter.

EP-A-1142619 discloses a filter assembly comprising a plurality of filter units made of α-silicon carbide and having a honeycomb structure. Each filter unit has a plurality of through-holes that are partitioned from each other by thin cell walls. The outer surface of the cell walls carries an oxide catalyst formed from a platinum group element or other metal elements and there oxides.

### DISCLOSURE OF THE INVENTION

The object of the present invention is to provide a honeycomb structure having an improved thermal shock resistance.

This object is solved by a honeycomb structure comprising plural through-holes that extend along the longitudinal directions thereof and are arranged in parallel through the intermediary of a partition and obtainable by sintering an object comprising a silicon carbide-containing particle that contains silicon carbide. The silicon carbide comprises at least one of silicon carbide with polymorph 6H and silicon carbide with polymorph 15R and the total content of the silicon carbide with polymorph 6H and the silicon carbide with polymorph 15R in the silicon carbide is 70 % or more by weight. The honeycomb structure is characterized in that it comprises an oxidized layer obtained by oxidizing at least one portion of a surface of the honeycomb structure.

Preferred embodiments of the present invention are set forth in the sub-claims.

### BRIEF DESCRIPTION OF THE DRAWINGS

FIG. 1 is a perspective view that schematically shows a specific example of an assembly-type honeycomb filter.
FIG. 2A is a perspective view that schematically shows a porous ceramic part constituting the honeycomb filter shown in FIG. 1.
FIG. 2B is a cross-sectional view of the porous ceramic part along line A-A shown in FIG. 2A.
FIG. 3A is a perspective view that schematically shows a specific example of an integrated-type honeycomb filter.
FIG. 3B is a cross-sectional view of the
   integrated-type honeycomb filter along line B-B shown in FIG. 3A.
FIG. 4 is a diagram showing the relation between the total content of silicon carbide with polymorph 6H and silicon carbide with polymorph 15R in silicon carbide and the flexural strength and pore size of a silicon carbide-based sintered object.

### BEST MODE FOR CARRYING OUT THE INVENTION

The silicon carbide-containing particle used in the invention contains silicon carbide, wherein the silicon carbide contains at least one of silicon carbide with polymorph 6H and silicon carbide with polymorph 15R and the total content of the silicon carbide with polymorph 6H and the silicon carbide with polymorph 15R in the silicon carbide is 70 % or more by weight.

Silicon carbide is broadly classified into α-type silicon carbide being a hexagonal system and β-type silicon carbide being a cubic system. It is known that many kinds of "polymorphs" exist in the α-type silicon carbide, whereas only one kind of "polymorph" (3C) exists in the β-type silicon carbide. Herein, a "polymorph" refers to a crystal structure of silicon carbide dependent on the difference in repeated stack along the c-axis of a base plane of a hexagonal crystal lattice. As representative polymorphs, 2H, 4H, 6H, and 15R are provided (in Ramsdell representation). Herein, the number represents the repeated unit number of stack(s) of a closest-packed plane (a base plane in the hexagonal system and a (111) plane in the cubic system), and H, C, and R represent a hexagonal crystal, a cubic crystal, and a rhombohedral crystal, respectively. For example, polymorph 2H has a repeated unit of AB while polymorph 4H has a basic repeated unit of ABAC. Additionally, the abundance ratios of these polymorphs can be calculated from data obtained, for example, by means of NMR, Raman scattering spectroscopy or by means of X-ray diffraction of silicon carbide powder.

It is expected that the reactivity and phase stability of silicon carbide-containing particles at high temperature be different dependent on the kinds of polymorphs. Therefore, the sintering property of silicon carbide-containing particles and the characteristics of an obtained silicon carbide-based sintered object can be improved by controlling the abundance ratios of polymorphs in the silicon carbide-containing particles. That is, as the crystal structures of silicon carbides are different from one another, the sintering reaction properties of silicon carbide-containing particles are also different from one another. Therefore, the sintering reaction of silicon carbide-containing particles can be facilitated by increasing the abundance ratio of a polymorph with a good sintering reaction property.

Also, it is known that the more the repeated unit number of the stacks in a polymorph is, the more the phase stability of silicon carbide at high temperature is generally improved. Therefore, it is preferable that the abundance ratio of a polymorph with a high repeated number of the stacks be high in order to improve the phase stability of silicon carbide-containing particles. In this case, when the silicon carbide-containing particles are sintered, thermal energy can be suppressed, which energy is consumed when silicon carbide with a polymorph in which the repeated number of the stacks is low is subjected to the phase transition to silicon carbide with a polymorph in which the repeated number of the stacks is high (for example, polymorph 3C to polymorph 6H). Consequently, , thermal energy can be effectively used for the sintering reaction.

The silicon carbide-containing particle used in the invention can be sintered more effectively, since the silicon carbide contains at least one of silicon carbide with polymorph 6H and silicon carbide with polymorph 15R and the total content of the silicon carbide with polymorph 6H and the silicon carbide with polymorph 15R in the silicon carbide is 70 % or more by weight.

The silicon carbide with polymorph 6H and the silicon carbide with polymorph 15R is difficult to be subjected to phase transition at high temperature and easy to be sintered. Therefore, thermal energy consumed for the phase transition of silicon carbide can be suppressed in the silicon carbide-containing particles in which the total content of the silicon carbide with polymorph 6H and the silicon carbide with polymorph 15R in the silicon carbide is 70 % or more by weight, so that the sintering reaction of the silicon carbide-containing particles can be effectively promoted. Consequently, the silicon carbide-containing particles are excellent in the sintering property at high temperature.

Also, when the total content of the silicon carbide with polymorph 6H and the silicon carbide with polymorph 15R in the silicon carbide is 70 % or more by weight, the strength of a silicon carbide-based sintered object is enhanced and the pore size of the silicon carbide-based sintered object increases.

Further, it is considered that polymorphs 3C and 4H have comparatively good sintering property (sintering reaction is easy to occur) among polymorphs of silicon carbide. On the other hand, since the polymorphs 6H and 15R are polymorphs that exhibit stable phases at high temperature, the more the silicon carbides with polymorphs 6H and 15R are, the more effectively thermal energy is consumed for the sintering reaction of silicon carbide-containing particles. Therefore, it is basically preferable that the abundance ratios of the silicon carbides with polymorphs 6H and 15R be high, in order to facilitate the sintering reaction of silicon carbide-containing particles.

In the silicon carbide-containing particles used in the present invention, the total content is preferably 70 % or more by weight and 95 % or less by weight. That is, it is preferable that the total content of the silicon carbide with polymorph 6H and the silicon carbide with polymorph 15R be 95 % or less by weight.

As the contents of the silicon carbide with polymorph 6H and the silicon carbide with polymorph 15R in silicon carbide are extremely high, internal stress becomes easy to be stored in silicon carbide-based sintered object, when the sintering reaction of silicon carbide-containing particles proceeds, since the phase transitions of these silicon carbides are difficult to occur. As a result, a microscopic crack easily occurs in the silicon carbide-based sintered object. Consequently, when the total content of the silicon carbide with polymorph 6H and the silicon carbide with polymorph 15R in silicon carbide is significantly high (greater than 95 % by weight), it is expected that the mechanical strength of silicon carbide-based sintered object becomes lower.

On the other hand, it is considered that other polymorphs 3C and 4H of silicon carbide be subjected to phase transition to polymorphs with high repeated numbers of the stacks at the time of the sintering reaction of silicon carbide-containing particles so as to serve to relax stress stored in a silicon carbide-based sintered object. It is preferable that the total content of silicon carbide with polymorph 3C and silicon carbide with polymorph 4H in silicon carbide be 5 % or more by weight in order to relax the stress stored in the silicon carbide-based sintered object. However, as the silicon carbide with polymorph 3C and the silicon carbide with polymorph 4H increase, the total content of the silicon carbide with polymorph 3C and the silicon carbide with polymorph 4H becomes relatively lower so that thermal energy is not effectively utilized for the sintering reaction of silicon carbide-containing particles.

Thus, the sintering property of silicon carbide-containing particles can be improved by adjusting the abundance ratios of silicon carbides with polymorph 3C, 4H, 6H, and 15R in the silicon carbide-containing particles. In silicon carbide obtained by a normal method of producing silicon carbide (Atchison method) using the reduction reaction of SiO₂ with coke, silicon carbide with a polymorph of which the repeated number of the stacks is higher than those of silicon carbides with polymorph 2H and 15R is hardly contained. The control of the abundance ratio of a polymorph in silicon carbide-containing particles can be realized as follows.

First, silicon dioxide is reduced with coke in an electric furnace according to the Atchison method to produce silicon carbide as a raw material. Then, the temperature of a reaction field of the reduction reaction varies with the distances from both electrodes provided in the electric furnace and obtained silicon carbides as raw materials undergo thermal histories different from one another. Therefore, silicon carbides with the abundance ratios of polymorphs that differ from one another dependent on the location in the electric furnace are obtained as raw materials. Next, after the silicon carbide as a raw material is roughly cut into five compartments and each compartment is sampled, each compartment is pulverized so as to obtain silicon carbide-containing particles with the abundance ratios of polymorphs different from one another. Further, silicon carbide-containing particles with more kinds of abundance ratios of polymorphs can be obtained by mixing silicon carbide-containing particles obtained from the compartments different from one another.

Additionally, the abundance ratios of polymorphs in silicon carbide-containing particles can be calculated by using eight peak intensities at 2θ = 33.66°, 34.06°, 34.88°, 35.74°, 37.80°, 38.27°, 38.80°, and 41.58° (θ: a diffraction angle of X-rays) obtained by means of X-ray diffraction of the silicon carbide-containing particles, a quantitative formula of Max Planck Institute, and a least-square approximation (ex. see J. Ruska et al., J. Mater. Sci., 14, p. 2013, 1979).

In silicon carbide-containing particles used in accordance with the present invention, preferably the silicon carbide-containing particles are obtained by mixing particles that contain silicon carbide with a first average particle diameter and particles that contain silicon carbide with a second average particle diameter different from the first average particle diameter.

For example, the silicon carbide-containing particles obtained as mentioned above are sized so as to sample silicon carbide-containing particles with an average particle diameter of 10 µm and silicon carbide-containing particles with an average particle diameter of 0.5 µm and these silicon carbide-containing particles are mixed at a ratio of 70:30 (weight ratio).

Then, the larger the average particle diameter of the silicon carbide-containing particles are, the higher thermal energy is required for sintering the silicon carbide-containing particles. Therefore, it is desirable to increase silicon carbide-containing particles with a large average particle diameter.

The method of manufacturing a silicon carbide-based sintered object includes, for example, a raw materials-mixing process for mixing or kneading the above silicon carbide-containing particles with a necessary organic binder so as to obtain paste that contains the silicon carbide-containing particles, a molding process for molding the paste obtained in the raw materials-mixing process into a predetermined shape, and a sintering process for sintering a molded object obtained in the molding process.

### (1) Raw material-mixing process

As the silicon carbide-containing particles, for example, silicon carbide-containing particles with the abundance ratios of polymorphs of silicon carbide different from one another, which are obtained by the aforementioned method, can be used. Also, the mixture of two kinds of silicon carbide-containing particles with average particle diameters different from one another (referred to as "coarse silicon carbide-containing particles" and "fine silicon carbide-containing particles", respectively, below) can be utilized. Herein, the abundance ratios of polymorphs in the coarse silicon carbide-containing particles and fine silicon carbide-containing particles are equivalent.

Paste that contains silicon carbide-containing particles can be prepared by adding, for example, an organic binder and a liquid dispersion medium, into a mixture of two kinds of silicon carbide-containing particles with average particle diameter different from one another. As an organic binder, for example, methyl cellulose, carboxymethyl cellulose, hydroxyethyl cellulose, polyethylene glycol, a phenol resin, an epoxy resin can be used. Also, as a liquid dispersion medium, an organic solvent such as benzene and an alcohol such as methanol, water can be used.

### (2) Molding process

The paste obtained in the raw materials-mixing process is molded into a predetermined shape (for example, a honeycomb shape). As a method for molding the paste, molding methods such as extrusion molding, casting, and pressing can be provided.

Then, an obtained molded object is dried. As drying means, a microwave dryer and a hot air dryer can be used. The drying is carried out at a temperature in a range of 100 - 200 °C.

### (3) Sintering process

The molded object obtained in the molding process is sintered in a non-oxidative atmosphere. Additionally, degreasing treatment for the molded object may be performed at a temperature of 300 - 1000 °C in a non-oxidative atmosphere before sintering the molded object, dependent on the kind of organic binder. The degreasing treatment for the molded object is performed before sintering the molded object so that the residue of the organic binder can be prevented from participating in the sintering reaction of the silicon carbide-containing particles and adversely affecting the characteristics of a silicon carbide-based sintered object at the time of sintering of the molded object. Also, contamination in a sintering furnace by a volatile component generated at the time of sintering of the molded object can be prevented.

As non-oxidative atmosphere, for example, nitrogen, argon, helium, hydrogen, or the mixture thereof is used.

The temperature at which the molded object is sintered depends on a time period of the treatment but is preferably approximately 1800 - 2200 °C. For example, if the time period of the treatment is 3 hours, the sintering may not sufficiently proceed at a temperature of 1700 °C or less. Additionally, although the sintering can be performed at temperature higher than 2200 °C, at such a high temperature, even if conventional silicon carbide-containing particles are used, the sintering proceeds for a comparatively short time period and, therefore, the benefit obtained by the method of manufacturing a silicon carbide-based sintered object relatively decreases.

According to the present invention, silicon carbide-containing particles can be sintered more effectively and a silicon carbide-based sintered object can be manufactured more effectively since the above silicon carbide-containing particles are used. Therefore, the cost for manufacturing a silicon carbide-based sintered object is reduced. Also, when a silicon carbide-based sintered object is manufactured, there is a low possibility of generating the non-uniformity of sintering and the failure of sintering and the yield for the manufacture of a product of the silicon carbide-based sintered object is improved.

In the method of manufacturing a silicon carbide-based sintered object, a step of oxidizing at least one portion of a surface of the silicon carbide-based sintered object is included.

### (4) Oxidation process

This step is carried out in order to improve the thermal shock resistance of a silicon carbide-based sintered object, or to provide an oxide coat layer such as a catalyst-supporting layer on a silicon carbide-based sintered object. The oxidation treatment for a surface of the silicon carbide-based sintered object is carried out in oxygen-containing atmosphere such as air atmosphere. The oxidation treatment may be carried out on any condition, dependent on the condition on which the silicon carbide-based sintered object is used. For example, a uniform oxidized layer of approximately 0.5 - 1 nm is formed on the surface of the silicon carbide-based sintered object by means of the oxidation treatment at 900 °C for one minute.

The thermal shock resistance of a silicon carbide-based sintered object can be improved by an oxidized layer formed by such an oxidation treatment, when the silicon carbide-based sintered object is regenerated. In other words, a silicon carbide-based sintered object with a good thermal shock resistance can be obtained.

Also, the adhesion property of a surface coat layer such as a catalyst-supporting layer can be improved, which layer is provided on a surface of the silicon carbide-based sintered object according to need in the latter process and contains another oxide such as alumina and titania. In other words, a silicon carbide-based sintered object on which separation of a surface coat layer such as a catalyst-supporting layer is difficult to occur can be obtained.

It is considered that the oxidation resistance of a silicon carbide-based sintered object and the properties (such as thickness and uniformity) of an oxidized layer formed on a surface of the silicon carbide-based sintered object vary with the abundance ratios of polymorphs in silicon carbide-containing particles. Herein, it is expected that the oxidation resistances of polymorphs 6H and 15R be better among polymorphs of silicon carbide. Then, as a silicon carbide-based sintered object obtained by using silicon carbide-containing particles that contain a high proportion of these polymorphs 6H and 15R is held in oxygen-containing atmosphere, a thin and uniform oxidized layer is rapidly formed on a surface of the silicon carbide-based sintered object. Therefore, it is considered that this oxidized layer serves to bond the silicon carbide-based sintered object and an oxide coat layer and the adhesion property of the oxide coat layer to the silicon carbide-based sintered object is improved.

The silicon carbide-based sintered object according to the present invention has an oxidized layer on a surface thereof. The oxidized layer on a surface of the silicon carbide-based sintered object can be formed by oxidizing at least one portion of a surface of the silicon carbide-based sintered object.

The silicon carbide-based sintered object according to the present invention has a honeycomb structure. The shape and number of cells that constitute the honeycomb structure may be any shape and number, respectively. Commonly, the cells that constitute the honeycomb structure have a pillar shape and the cross-section shape of the cell is a polygon such as, approximately, a square, rectangle, or triangle, or alternatively, the cross-section shape of a circle or ellipse.

A filter capable of trapping a particulate includes the silicon carbide-based sintered object in accordance with the present invention.

The filter capable of trapping a particulate may be, for example, an automotive exhaust gas-purifying filter that is used for trapping particulates in exhaust gas exhausted from an internal combustion engine of an automobile.

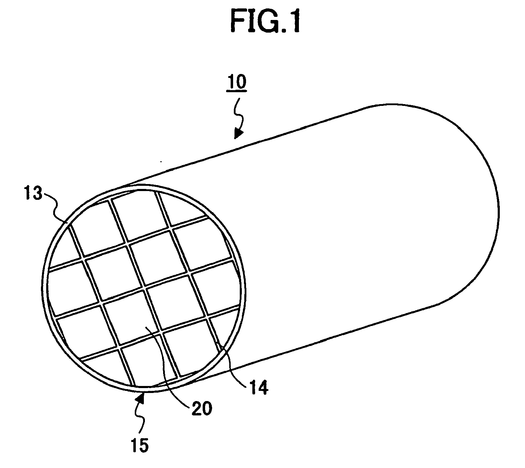

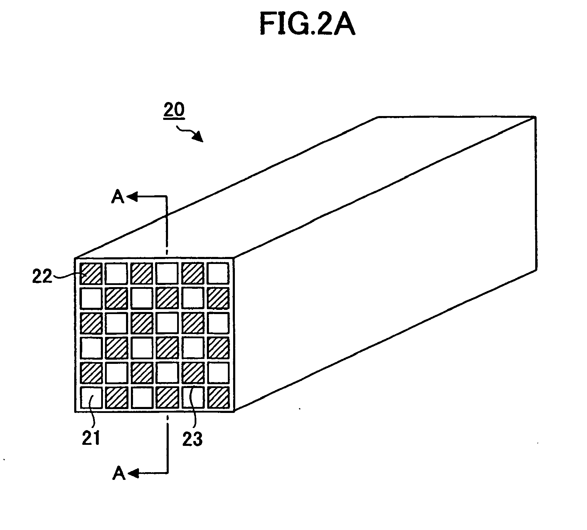

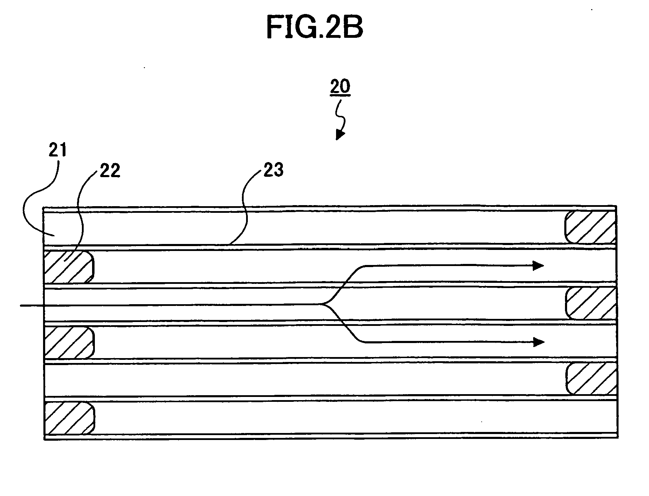

FIG. 1 is a perspective view that schematically shows a specific example of an assembly-type honeycomb filter. Also, FIG. 2A is a perspective view that schematically shows a porous ceramic part constituting the honeycomb filter shown in FIG. 1 and FIG. 2B is a cross-sectional view of the porous ceramic part along line A-A shown in FIG. 2A.

As shown in FIG. 1, FIG. 2A, and FIG. 2B, a honeycomb filter 10 is composed of a cylindrical ceramic block 15 and plural porous ceramic parts 20 are bundled using a seal material layer 14 in the block. A seal material layer 13 is provided around the ceramic block 15, as necessary or desired, in order to prevent the leak of exhaust gas or to adjust the shape of the ceramic block 15.

The porous ceramic parts 20 constituting the cylindrical ceramic block 15 have a square-pillar shape herein. Also, a large number of through-holes 21 that extend along the longitudinal directions of the porous ceramic parts 20 are arranged in parallel through the intermediary of a partition 23 and one end of the through-hole 21 is sealed with a sealing material 22. Therefore, exhaust gas flowing into one through-hole 21 passes through a partition 23 that separates the through-holes 21 and, subsequently, flows out from another through-hole 21 and the partition 23 that separates these through-holes 21 can function as a filter for trapping particulates.

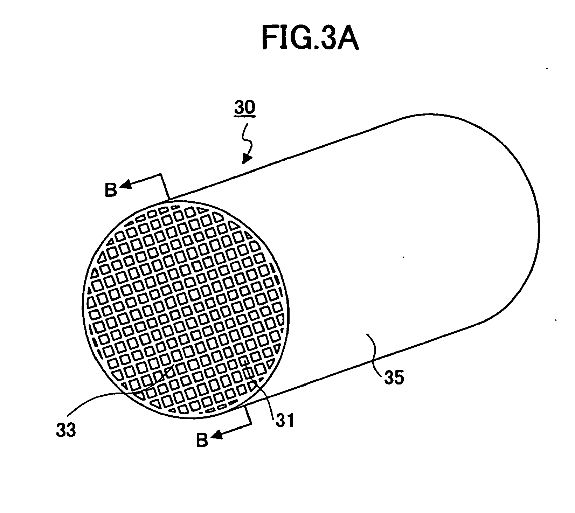

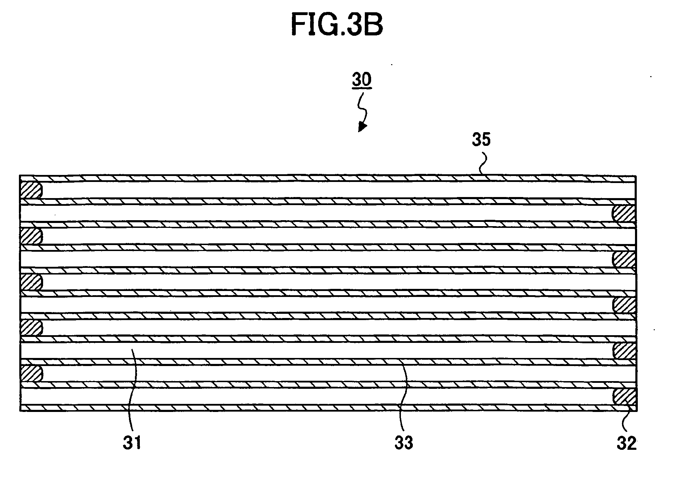

FIG. 3A is a perspective view that schematically shows a specific example of an integrated-type honeycomb filter and FIG. 3B is a cross-sectional view of the integrated-type honeycomb filter along line B-B shown in FIG. 3A.

As shown in FIG. 3A, a honeycomb filter 30 is composed of a cylindrical ceramic block 35 and the block is composed of a porous ceramic in which a large number of through-holes 31 that extend along the longitudinal directions of the honeycomb filter 30 are arranged in parallel through the intermediary of a partition 33.

As shown in FIG. 3B, one end of the through-hole 31 provided to the ceramic block 35 of the honeycomb filter 30 is sealed with a sealing material 32 and the other end of the through-hole 31 is not sealed with the sealing material 32. Therefore, exhaust gas flowing into one through-hole 31 passes through a partition 33 that separates the through-holes 31 and, subsequently, flows out from another through-hole 31 and the partition 33 that separates these through-holes 31 can function as a filter for trapping particulates.

Also, a seal material layer may be provided around the ceramic block 35 similar to the honeycomb filter 10 shown in FIG. 1, which is not shown in FIGs. 3A and 3B.

Additionally, the silicon carbide-based sintered object can be used, for example, for a heater, a jig for semiconductor fabrication, a thermal insulation material, a heat exchanger, a catalyst carrier, a hot-temperature gas-purifying filter, a molten metal-filtering filter, as well as the filter capable of trapping particulates such as an automotive exhaust gas-purifying filter.

### [Example]

The present invention is explained based on an example below.

Only homeycomb filters B and D of examples 1-9 are in accordance with the present invention.

As shown in Table 1, a silicon carbide-based sintered object was manufactured using 12 kinds of silicon carbide-containing particles in which the abundance ratios of polymorphs 3C, 4H, 6H, and 15R in silicon carbide are adjusted, in accordance with the aforementioned processes (examples 1-9 and comparisons 1 - 3).

**Table 1**

| | Polymorph contents (Weight %) | | | | | Pore size (µm) | Flexural strength (Kg) |
|---|---|---|---|---|---|---|---|
| | 3H | 4H | 6H | 15R | 6H+15R | | |
| Example 1 | 10 | 5 | 85 | 0 | 85 | 10.5 | 450 |
| Example 2 | 3 | 10 | 87 | 0 | 87 | 10.3 | 430 |
| Example 3 | 5 | 5 | 85 | 5 | 90 | 10.3 | 425 |
| Example 4 | 0 | 5 | 90 | 5 | 95 | 10.3 | 425 |
| Example 5 | 8 | 10 | 82 | 0 | 82 | 10.3 | 426 |
| Example 6 | 3 | 15 | 82 | 0 | 82 | 9.8 | 410 |
| Example 7 | 0 | 23 | 77 | 0 | 77 | 9.6 | 405 |
| Example 8 | 5 | 25 | 70 | 0 | 70 | 9.5 | 400 |
| Example 9 | 5 | 0 | 92 | 3 | 95 | 9.5 | 403 |
| Comparison 1 | 0 | 35 | 65 | 0 | 65 | 8.5 | 330 |
| Comparison 2 | 5 | 35 | 60 | 0 | 60 | 8.6 | 320 |
| Comparison 3 | 5 | 40 | 55 | 0 | 55 | 8.0 | 270 |

Additionally, samples of the silicon carbide-based sintered objects were honeycomb-shaped silicon carbide-based sintered objects in which a number of cells extending along the longitudinal directions of the silicon carbide-based sintered object were arranged in parallel through the intermediary of cell walls with a thickness of approximately 0.1 - 0.2 mm (referred to as "honeycomb filters" below). In the examples, the shape of the cross section of each cell orthogonal to the longitudinal directions of the cells was a square. Also, the dimensions of the honeycomb filters were 34.3 mm x 34.3 mm x 150 mm (which filters are referred to as "honeycomb filters A" below). Temperature for sintering the silicon carbide-containing particles was 2200 °C and a time period for sintering the silicon carbide-containing particles was 3 hours.

As an X-ray diffraction apparatus for analyzing polymorphs of silicon carbide in the silicon carbide-containing particles, Rigaku RINT-2500 produced by Rigaku Denki was used. A light source of the X-ray diffraction apparatus was CuKα1. As a method for measuring the X-ray diffraction, first, the sample was pulverized and homogenized, and packed into a sample holder made of glass. Then, the sample holder in which the sample was packed was set on a sample stage of a goniometer. Next, cooling water was flown through an X-ray lamp and a power supply of the X-ray diffraction apparatus was turned on. The voltage of the power supply was gradually raised to be 30 kV, and the current was set to 15 mA by rotating a current selector. Afterward, the measurement conditions of the X-ray diffraction were set as
Dispersion slit: 0.5 °
Longitudinal dispersion limitation slit: 10 mm
Scattering slit: 0.5 °
Photo-receiving slit: 0.3 mm
Monochromatic photo-receiving slit: 0.8 mm
Scanning mode: continuous
Scanning speed: 2000 °/ min
Scanning step: 0.01 °
Scanning range: 5.000 ° - 90.000 °
Monochromator: count monochromator
Optical system: concentric optical system
and the measurement of the X-ray diffraction was performed.

Next, the measurement of pore sizes of and three-point flexure tests for the honeycomb filters A were performed. The pore sizes of the honeycomb filters A were measured by cutting the honeycomb filters A into cubes with sides of 0.8 cm and using an Automated Porosimeter (Autopore 1119405 produced by Shimadzu Corporation). Then, the pore size was the average pore size of a cube of the honeycomb filter A. Also, the three-point flexure tests for the honeycomb filters A were performed using an apparatus (5582) produced by Instron Corporation.

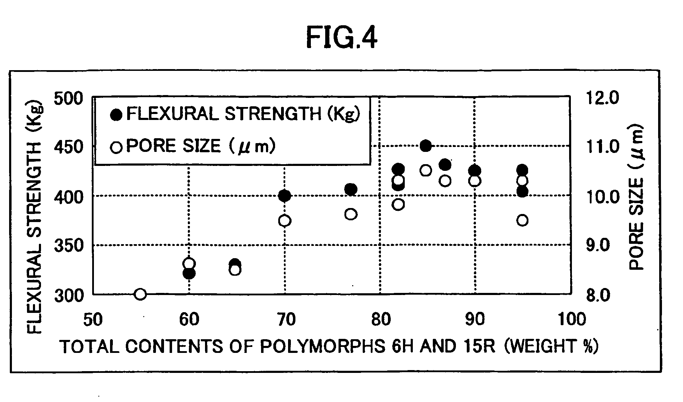

The obtained results are shown in FIG. 4. The pore sizes of the honeycomb filters A (examples 1 - 9) manufactured by silicon carbide-containing particles in which the total content of the silicon carbide with polymorph 6H and the silicon carbide with polymorph 15R was 70 % or more by weight were approximately 10 µm and the honeycomb filters A had large pore sizes. Also, the flexural strengths of these honeycomb filters A were greater than 400 kg and the honeycomb filters A had good strengths.

Herein, the large pore size of the sintered object means that the sintering reaction between the silicon carbide-containing particles proceeded more sufficiently even for sintering treatments at the same temperature and time period. Therefore, it is clear that the honeycomb filters A manufactured by using silicon carbide-containing particles in which the total content of the silicon carbide with polymorph 6H and the silicon carbide with polymorph 15R was 70 % or more by weight, that is, the honeycomb filters A of examples 1-9, had excellent sintering properties compared to the honeycomb filters A of comparisons 1-3.

Also, the pore sizes of the honeycomb filters A of examples 1-9 were in a range of 10 µm ± 0.5 µm and these pore sizes almost coincided with a pore size of a particulate-trapping filter loaded on a normal Diesel car. Therefore, whereas the sintering of the silicon carbide-containing particles used in comparisons 1 - 3 was insufficient for sintering treatment at 2200 °C for 3 hours, the silicon carbide-based sintered objects with a preferable pore size were obtained by means of the same sintering treatment with respect to the silicon carbide-containing particles used in examples 1-9.

As long as the silicon carbide-containing particles were used in which the total content of the silicon carbide with polymorph 6H and the silicon carbide with polymorph 15R was 95 % or less by weight, the decreases of the strengths of the silicon carbide-based sintered objects were low.

Next, PM regeneration tests described below were carried out using similar honeycomb filters (examples 1 - 9 and comparisons 1 - 3).

For the PM regeneration tests, totally four kinds of honeycomb filters were used. That is, the honeycomb filters A that remained on the conditions after the sintering, honeycomb filters B to which a pre-oxidation treatments at 900 °C for 1 minute were applied after the sintering, honeycomb filters C in which catalyst supporting ; layers were applied on honeycomb side walls of the honeycomb filters A, and honeycomb filters D in which catalyst supporting layers were applied on honeycomb side walls of the honeycomb filters B were used.

For the catalyst supporting layer, alumina slurry with an average particle diameter of 2 nm was prepared by mixing γ-alumina and water in an aqueous solution of nitric acid as a dispersing agent and applying mill treatment to the obtained mixture for 24 hours by ball mill. The slurry was impregnated into the honeycomb filters A and dried at 200 °C and, subsequently, kept at 600 °C so as to be fixed on surfaces of the honeycomb filters A. The honeycomb filters A were dipped in a solution of dinitroammineplatinum nitrate, dried at 110 °C, and kept at 500 °C in nitrogen atmosphere, so that platinum was fixed on a surface of the honeycomb filters A.

The PM regeneration test is a test such that a particle material (PM) is made to adhere to a honeycomb filter and, subsequently, this filter is kept at high temperature for burning the PM, so as to evaluate the change of the state of the honeycomb filter between before and after the burning of the PM. Herein, the collection of the PM was performed so that the amount of the PM per a unit volume of each honeycomb filter was 10 g/L, so as to evaluate the state of each honeycomb filter after the regeneration test. Particularly, the existence or nonexistence of a crack on surfaces of the honeycomb filters A and B was observed and the existence or nonexistence of separation of the catalyst supporting layers on the honeycomb filters C and D was evaluated. Those results are shown in Table 2.

**Table 2**

| | Polymorph contents (Weight %) | | | | | PM regeneration test results | | | |
|---|---|---|---|---|---|---|---|---|---|
| | 3H | 4H | 6H | 15R | 6H+ 15R | Filter A /Without pre-oxidation | Filter B /With pre- oxidation | Filter C /Without pre-oxidation /With catalyst layer | Filter D /With pre-oxidation /With catalyst layer |
| Example 1 | 10 | 5 | 85 | 0 | 85 | Cracked | No crack | Separated | No separation |
| Example 2 | 3 | 10 | 87 | 0 | 87 | Cracked | No crack | Separated | No separation |
| Example 3 | 5 | 5 | 85 | 5 | 90 | Cracked | No crack | Separated | No separation |
| Example 4 | 0 | 5 | 90 | 5 | 95 | Cracked | No crack | Separated | No separation |
| Example 5 | 8 | 10 | 82 | 0 | 82 | Cracked | No crack | Separated | No separation |
| Example 6 | 3 | 15 | 82 | 0 | 82 | Cracked | No crack | Separated | No separation |
| Example 7 | 0 | 23 | 77 | 0 | 77 | Cracked | No crack | Separated | No separation |
| Example 8 | 5 | 25 | 70 | 0 | 70 | Cracked | No crack | Separated | No separation |
| Example 9 | 5 | 0 | 92 | 3 | 95 | Cracked | No crack | Separated | No separation |
| Comparison 1 | 0 | 35 | 65 | 0 | 65 | Cracked | Cracked | Separated | Separated |
| Comparison 2 | 5 | 35 | 60 | 0 | 60 | Cracked | Cracked | Separated | Separated |
| Comparison 3 | 5 | 40 | 55 | 0 | 55 | Cracked | Cracked | Separated | Separated |

As the results with respect to the honeycomb filters A and B were compared, cracks were produced on surfaces of the honeycomb filters A to which the pre-oxidation treatment was not applied. On the other hand, no crack was produced only on surfaces of the filters of examples 1 - 9 (filters manufactured by using silicon carbide-containing particles in which the total content of the silicon carbide with polymorph 6H and the silicon carbide with polymorph 15R was 70 % or more by weight) among the honeycomb filters B to which the pre-oxidation treatment was applied.

This result indicates that when a silicon carbide-based sintered object is manufactured using silicon carbide-containing particles in which the total content of the silicon carbide with polymorph 6H and the silicon carbide with polymorph 15R is 70 % or more by weight, the thermal shock resistance of the obtained silicon carbide-based sintered object is improved.

Next, as the results with respect to the honeycomb filters C and D were compared, the separation of the catalyst supporting layers occurred after the PM regeneration tests with respect to the honeycomb filters C to which the pre-oxidation treatment was not applied and the catalyst supporting layer was provided. On the other hand, no separation of the catalyst supporting layer occurred after the PM regeneration tests only in the filters of examples 1 - 9 (filters manufactured by using silicon carbide-containing particles in which the total content of the silicon carbide with polymorph 6H and the silicon carbide with polymorph 15R was 70 % or more by weight) among the honeycomb filters D to which the pre-oxidation treatment was applied.

This result indicates that the adhesion property of a catalyst supporting layer to a silicon carbide-based sintered object manufactured by using silicon carbide-containing particles in which the total content of the silicon carbide with polymorph 6H and the silicon carbide with polymorph 15R is 70 % or more by weight is improved by means of a pre-oxidation treatment for the silicon carbide-based sintered object.

Thus, the silicon carbide-containing particles in which the total content of the silicon carbide with polymorph 6H and the silicon carbide with polymorph 15R is 70 % or more by weight exhibited good sintering property. Also, the thermal shock resistance of the obtained silicon carbide-based sintered object was improved and the adhesion property of the surface coat layer to the silicon carbide-based sintered object was improved by applying the pre-oxidation treatment to the silicon carbide-based sintered object.

## Claims

1. A honeycomb structure comprising plural through-holes that extend along the longitudinal directions thereof and are arranged in parallel through the intermediary of a partition and obtainable by sintering an object comprising a silicon carbide-containing particle that contains silicon carbide, wherein the silicon carbide comprises at least one of silicon carbide with polymorph 6H and silicon carbide with polymorph 15R and the total content of the silicon carbide with polymorph 6H and the silicon carbide with polymorph 15R in the silicon carbide is 70 % or more by weight, **characterized in that** the honeycomb structure comprises an oxidized layer obtained by oxidizing at least one portion of a surface of the honeycomb structure.

2. The honeycomb structure of claim 1, **characterized in that** plural honeycomb parts including the plural through-holes are bundled using a seal material layer.

3. The honeycomb structure of claim1 or 2, **characterized by** further comprising a sealing part for sealing one end of the through-hole.

4. The honeycomb structure of any of claims 1 to 3, **characterized in that** the total content is 70 % or more by weight and 95 % or less by weight.

5. The honeycomb structure of any of claims 1 to 4, **characterized in that** the silicon carbide-containing particle is obtainable by mixing particles that contain silicon carbide with a first average particle diameter and particles that contain silicon carbide with a second average particle diameter different from the first average particle diameter.

6. The honeycomb structure of claim 1, **characterized by** comprising a catalyst-supporting layer as at least one portion of the oxidized layer.

## Patentansprüche

1. Wabenkörperstruktur umfassend eine Vielzahl von Durchgangsöffnungen, welche sich entlang ihrer Längsrichtungen erstrecken und parallel mit dazwischen liegenden Trennwänden angeordnet sind, und erhältlich durch Sintern eines Gegenstandes umfassend ein siliziumkarbidhaltiges Partikel, welches Siliziumkarbid enthält, wobei das Siliziumkarbid wenigstens ein Siliziumkarbid mit einem Polytypen 6H und Siliziumkarbid mit einem Polytypen 15R umfasst, und wobei der Gesamtgehalt des Siliziumkarbids mit dem Polytypen 6H und des Siliziumkarbids mit dem Polytypen 15R in dem Siliziumkarbid 70 Gew.-% oder mehr beträgt, **dadurch gekennzeichnet, dass** die Wabenkörperstruktur eine oxidierte Schicht umfasst, erhalten durch das Oxidieren wenigstens eines Teiles einer Oberfläche des Wabenkörpers.

2. Wabenkörperstruktur nach Anspruch 1, **dadurch gekennzeichnet, dass** die Vielzahl von Wabenkörperteilen, einschließlich der Vielzahl von Durchgangsöffnungen, unter Verwendung einer Dichtungsmaterialschicht gebündelt sind.

3. Wabenkörperstruktur nach Anspruch 1 oder 2, **dadurch gekennzeichnet, dass** sie ein Dichtungsteil umfasst, um ein Ende der Durchgangsöffnung abzudichten.

4. Wabenkörperstruktur nach einem der Ansprüche 1 bis 3, **dadurch gekennzeichnet, dass** der Gesamtgehalt 70 Gew.-% oder mehr und 95 Gew.-% oder weniger beträgt.

5. Wabenkörperstruktur nach einem der Ansprüche 1 bis 4, **dadurch gekennzeichnet, dass** das siliziumkarbidhaltige Partikel erhältlich ist durch das Mischen von Partikeln, welche Silziumkarbid mit einem ersten mittleren Durchmesser enthalten, und von Partikeln, welche Silziumkarbid mit einem zweiten mittleren, sich von dem ersten mittleren Partikeldurchmesser unterscheidenden, Durchmesser enthalten.

6. Waberkörperstruktur nach Anspruch 1, **dadurch gekennzeichnet, dass** eine katalysatortragende Schicht als wenigstens ein Teil der oxidierten Schicht umfasst ist.

## Revendications

1. Structure en nid d'abeille comprenant plusieurs trous débouchants qui s'étendent suivant les directions longitudinales de celle-ci et qui sont agencés parallèlement par l'intermédiaire d'une séparation et qui est susceptible d'être obtenue en frittant un objet comprenant une particule contenant du carbure de silicium qui contient du carbure de silicium, dans laquelle le carbure de silicium comprend au moins l'un du carbure de silicium avec du polymorphe 6H et du carbure de silicium avec du polymorphe 15R et dans laquelle la teneur totale du carbure de silicium avec le polymorphe 6H et du carbure de silicium avec le polymorphe 15R dans le carbure de silicium est de 70 % ou plus en poids, **caractérisée en ce que** la structure en nid d'abeille comprend une couche oxydée obtenue en oxydant au moins une partie d'une surface de la structure en nid d'abeille.

2. Structure en nid d'abeille selon la revendication 1, **caractérisée en ce que** plusieurs parties en nid d'abeille comprenant les plusieurs trous débouchants sont regroupées en utilisant une couche de matériau étanche.

3. Structure en nid d'abeille selon la revendication 1 ou 2, **caractérisée en ce qu'**elle comprend en outre une pièce d'étanchéité destinée à étanchéifier une extrémité du trou débouchant.

4. Structure en nid d'abeille selon l'une quelconque des revendications 1 à 3, **caractérisée en ce que** la teneur totale est de 70 % ou plus en poids et de 95 % ou moins en poids.

5. Structure en nid d'abeille selon l'une quelconque des revendications 1 à 4, **caractérisée en ce que** la particule contenant du carbure de silicium peut être obtenue en mélangeant des particules qui contiennent du carbure de silicium ayant un premier diamètre moyen de particules et des particules qui contiennent du carbure de silicium ayant un deuxième diamètre moyen de particules différent du premier diamètre moyen de particules.

6. Structure en nid d'abeille selon la revendication 1, **caractérisée en ce qu'**elle comprend une couche de support de catalyseur en tant qu'au moins une partie de la couche oxydée.
